# EUROPÄISCHE PATENTSCHRIFT

(11) **EP 2 339 237 B1**
(45) Veröffentlichungstag und Bekanntmachung des Hinweises auf die Patenterteilung: **04.05.2016**
(21) Anmeldenummer: 10194475.9
(22) Anmeldetag: 10.12.2010
(51) Int. Cl.: F24C 3/10, F23Q 3/00

(54) **Gasherd mit einer Zündelektrode**
Gas range with an ignition electrode
Cuisinière à gaz doté d'une électrode d'allumage

(30) Priorität: 24.12.2009 CN 200910265599
(43) Veröffentlichungstag der Anmeldung: 29.06.2011
(73) Patentinhaber: BSH Hausgeräte GmbH, 81739 München (DE)
(72) Erfinder: Du, Zhihong, 214192, Wuxi (CN); Gu, Xuebin, 210000, Nanjing (CN); Liu, Chuan, 210054 Nanjing (CN)

(56) Entgegenhaltungen:
- WO-A1-2007/012766
- DE-U1- 29 921 252
- FR-A1- 2 408 096
- US-A- 5 443 380
- US-A- 6 015 322
- US-B1- 6 254 381
- DATABASE WPI Week 199937 Thomson Scientific, London, GB; AN 1999-441147 XP002631988, & JP 11 182848 A (ELEPHANT MAHOHBIN KK) 6. Juli 1999 (1999-07-06)

## Beschreibung

### Gebiet der Erfindung

Die vorliegende Erfindung bezieht sich auf ein Gasherd mit einer Zündelektrode.

### Technischer Hintergrund

Bei den aus dem Stand der Technik bekannten Gasherden erfolgt das Zünden des Gases in der Regel durch eine elektrische Zündung mittels Zündelektroden. Diese stellen eine der wichtigsten Komponenten für die Zündung dar, und als Zündelektrode wird meistens eine Piezo-Elektrode eingesetzt. Eine derartige Zündelektrode besteht üblicherweise aus der eigentlichen Elektrode und einer isolierenden Keramikschicht, die unter hohen Temperaturen auf die Außenseite der Elektrode aufgetragen wird. Die Zündelektrode ist über elektrische Leitungen mit der Steuereinheit des Gasherdes verbunden. Dagegen erzeugt eine Zündelektrode bei herkömmlichen Gasherden an ihrer Oberseite Flammen, die sich in alle Richtungen erstrecken, und führt somit zu einer ziemlich ungenauen Zündung. Oftmals ist mit einer zu langen Zünddauer oder sogar einem Fehlschlagen der Zündung zu rechnen. Daher ist es erforderlich, entsprechende Verbesserungen vorzunehmen.

Die US 6,015,322 A offenbart einen Gasherd nach dem Oberbegriff des Patentanspruchs 1. Die FR 2 408 096, US 5,443,380 A, US 6,254,381 B1 und WO 2007/012766 A1 beschreiben jeweils Brenner, unter anderem für Gasherde.

### Beschreibung der Erfindung

Eine Aufgabe der Erfindung besteht darin, einen Gasherd mit einer Zündelektrode, welche eine erhöhte Zündgenauigkeit aufweist, anzubieten.

Erfindungsgemäß wird diese Aufgabe durch einen Gasherd mit den Merkmalen des Patentanspruchs 1 gelöst.

Bevorzugterweise ist gemäß einer Ausführungsform der Erfindung eine Zündelektrode vorgesehen, die erfindungsgemäß dadurch gekennzeichnet ist, dass die Struktur zur Begrenzung der Zündrichtung eine Nut ist, die an der Oberseite des Keramikmantels seitlich am Keramikmantel geöffnet ist, und dass die Elektrode im Wesentlichen ┐-förmig ausgebildet ist und entsprechend einen kurzen Schenkel umfasst, der sich mit dessen nach außen weisendem Ende innerhalb der Nut befindet. Durch die spezielle Formgebung der Elektrode einer derartigen Zündelektrode wird die Zündung in einer bestimmten Position und einer bestimmten Richtung vereinfacht, was zusätzlich durch die an der Oberseite des Keramikmantels seitlich geöffnete Nut gefördert wird, so dass die Zündrichtung von der Ausrichtung der Öffnung der Nut abhängt. Das Merkmal "┐-förmig" bedeutet anders ausgedrückt: in der Form eines auf dem Kopf stehenden "L".

Bevorzugt ist gemäß einer Ausführungsform der Erfindung eine Zündelektrode vorgesehen, die erfindungsgemäß dadurch gekennzeichnet ist, dass die Struktur zur Begrenzung der Zündrichtung eine Nut ist, die an der Oberseite des Keramikmantels sowohl nach oben als auch seitlich geöffnet ist, und dass die Elektrode im Wesentlichen ┐-förmig ausgebildet ist und anstprechend einen kurzen Schenkel umfasst der sich mit dessen nach außen weisendem Ende innerhalb der Nut befindet. Eine derartige Zündelektrode ist zum einen einfach aufgebaut und leicht herzustellen, zum anderen ermöglicht sie eine Zündrichtung, die genau auf die Ausrichtung der an der Oberseite des Keramikmantels sowohl nach oben als auch seitlich geöffneten Nut beschränkt ist.

Weiterhin ist bevorzugt gemäß einer Ausführungsform der Erfindung eine Zündelektrode vorgesehen, die erfindungsgemäß dadurch gekennzeichnet ist, dass der kurze Schenkel der Elektrode eine Länge aufweist, die ungefähr der radialen Tiefe der Nut entspricht. So findet die Flammenerzeugung annähernd an der Randkante der Mantelfläche der Zündelektrode statt, wodurch die Zündposition und -richtung noch genauer bestimmt wird.

Weiter bevorzugt ist gemäß einer Ausführungsform der Erfindung eine Zündelektrode vorgesehen, die erfindungsgemäß dadurch gekennzeichnet ist, dass die Breite W der Nut etwas größer ist als der Durchmesser der Elektrode. Damit wird die Zündelektrode insgesamt kompakter.

Bevorzugterweise ist gemäß einer weiteren Ausführungsform der Erfindung eine Zündelektrode vorgesehen, die erfindungsgemäß dadurch gekennzeichnet ist, dass die Elektrode teilweise aus der Oberseite des Keramikmantels hervorragt und somit einen Zündteil bildet, und dass als Struktur zur Begrenzung der Zündrichtung eine Wand dient, die an der Oberseite des Keramikmantels diesen Zündteil nur zum Teil umschließt. Bei einer derart ausgebildeten Zündelektrode erweist sich die Struktur zur Begrenzung der Zündrichtung als leicht herstellbar und ausführbar.

Weiter bevorzugt ist gemäß einer bevorzugten Ausführungsform der Erfindung eine Zündelektrode vorgesehen, die erfindungsgemäß dadurch gekennzeichnet ist, dass an der Unterseite des Keramikmantels ein Positionierkragen angeformt ist, der sich teilweise radial nach außen zu einem Drehanschlag erstreckt. Zum Vereinfachen der Herstellung der Zündelektrode weist diese die Form eines Kegelstumpfs mit einem geringen Neigungswinkel auf und ist im Querschnitt kreisförmig ausgestaltet. Durch das Vorsehen eines Drehanschlags am Positionierkragen der Zündelektrode kann eine Drehung der Zündelektrode um ihre Achse vermieden werden, um die sich aus der Gestaltung der Elektrode und des Keramikmantels ergebende Begrenzung der Zündrichtung weiter zu verbessern.

Beim Betrieb eines erfindungsgemäß ausgestalteten Brenners wird das Brenngas zunächst in den inneren Gasmischraum eingeleitet und strömt dann aus den Zentralbrennstellen und der Zündnut heraus, wobei der Lichtbogen zur Zündung zuerst zwischen dem Vorsprung und der Elektrode entsteht. Somit erfolgt die Zündung zunächst an der Zündnut und dann an den Zentralbrennstellen. Dabei sorgt die Zündnut dafür, das aus dem inneren Gasmischraum austretende Gas so schnell wie möglich zu entzünden. Durch die Anordnung der Zündnut im Vorsprung, der aus dem Außenumfang des zentralen Gasmischraums hervorragt, kann zudem gewährleistet- werden, dass der Lichtbogen zur Zündung gerade an der Stelle der Zündnut erzeugt wird.

In einer Ausführungsform der Erfindung ist der erfindungsgemäße Gasherd dadurch gekennzeichnet, dass es sich bei dem Verbindungssockel um eine Brennerfassung handelt, in der ein Anschlagschlitz ausgebildet ist, der dem Drehanschlag entsprechend geformt ist und in dem der Drehanschlag im Montagezustand liegt. Des Weiteren ist die Zündelektrode auf einfache und sichere Weise an der Brennerfassung als Gasversorgung befestigt.

Um der mit der Brennerfassung verbundenen Zündelektrode ein Stoßdämpfungsvermögen zu verleihen, ist erfindungsgemäß ein Gasherd vorgesehen, der dadurch gekennzeichnet ist, dass an der Brennerfassung Rastausnehmungen ausgebildet sind, zwischen denen und dem Positionierkragen eine Druckfeder angebracht ist.

Vorzugsweise ist der erfindungsgemäße Gasherd dadurch gekennzeichnet, dass am unteren Ende der Elektrode ein elektrischer Leiter angeschlossen ist, der sich durch eine Leiteröffnung unterhalb der Rastausnehmungen unter die Brennerfassung erstreckt, wobei an einem sich direkt unterhalb der Brennerfassung befindenden Abschnitt des Leiters ein Federring greift. Mit diesem Federring kann vor der Montage der Deckplatte des Gasherdes die Zündelektrode in einer voreingestellten position gehalten werden um zu vermeiden, dass sich der Drehanschlag der Zündelektrode durch die Druckfeder aus dem Anschlagschlitz in der Brennerfassung löst. Dies spielt eine besonders wichtige Rolle, wenn eine benutzerfreundliche und zeitsparende Montage erwünscht ist.

### Darstellung der Abbildungen

Zur weiteren Beschreibung der Erfindung wird auf die beigefügten Zeichnungen und einige Ausführungsbeispiele Bezug genommen. Es versteht sich von selbst, dass die Zeichnungen lediglich zur beispielhaften und ergänzenden Darstellung dienen und keine Einschränkung der vorliegenden Erfindung darstellen.

### Es zeigen

FIG 1 einen dreidimensionalen Teilschnitt des Brenners und der Zündelektrode in einer Ausführungsform eines erfindungsgemäßen Gasherdes,
FIG 2 eine Teil-Draufsicht auf den Brenner und die Zündelektrode in einer Ausführungsform eines erfindungsgemäßen Gasherdes,
FIG 3 eine dreidimensionale Explosionszeichnung eines Teils der strukturellen Einheit aus Brennerfassüng und-Zündelektrode in einer Ausführungsform eines erfindungsgemäßen Gasherdes,
FIG 4 eine dreidimensionale Zusammensetzungszeichnung eines Teils der strukturellen Einheit aus Brennerfassung und Zündelektrode in einer Ausführungsform eines erfindungsgemäßen Gasherdes,

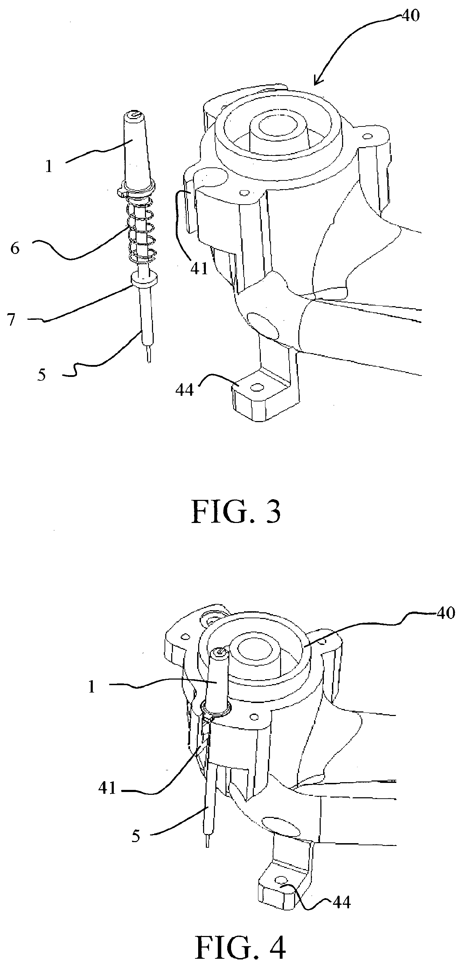

FIG 4 eine dreidimensionale Zusammensetzungszeichnung eines Teils der strukturellen Einheit-aus-Brennerfassung und--Zündelektrode in einer Ausführungsform eines erfindungsgemäßen Gasherdes,

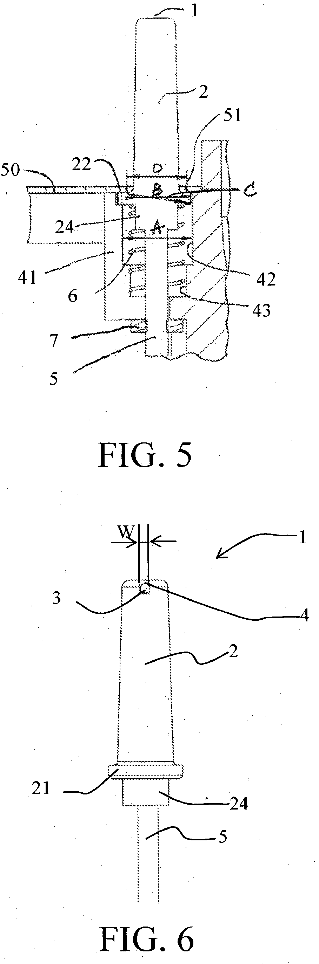

FIG 5 einen Teilschnitt der strukturellen Einheit aus Brennerfassung und Zündelektrode in einer Ausführungsform eines erfindungsgemäßen Gasherdes,
FIG 6 eine dreidimensionale Darstellung einer Zündelektrode in einer ersten Ausführungsform eines erfindungsgemäßen Gasherdes,

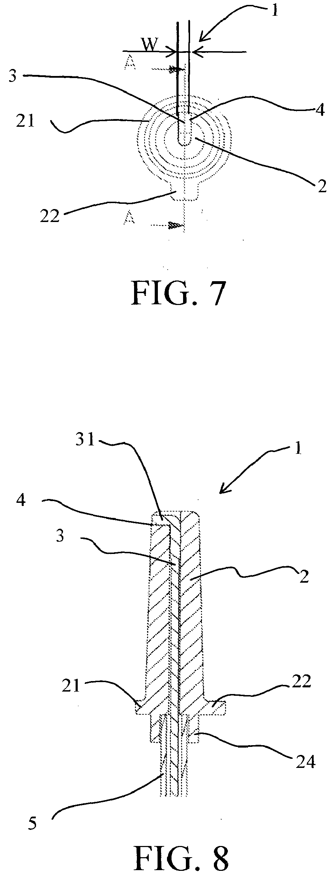

FIG 7 eine Draufsicht auf die Zündelektrode in der ersten Ausführungsform eines erfindungsgemäßen Gasherdes,
FIG 8 eine Schnittansicht durch die Zündelektrode in der ersten Ausführungsform eines erfindungsgemäßen Gasherdes entlang der Linie A-A in FIG 7 und

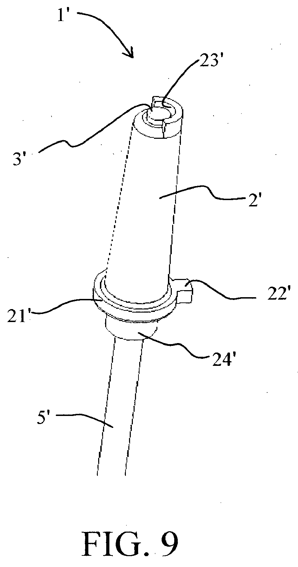

FIG 9 eine dreidimensionale Darstellung einer Zündelektrode in einer zweiten Ausführungsform eines erfindungsgemäßen Gasherdes.

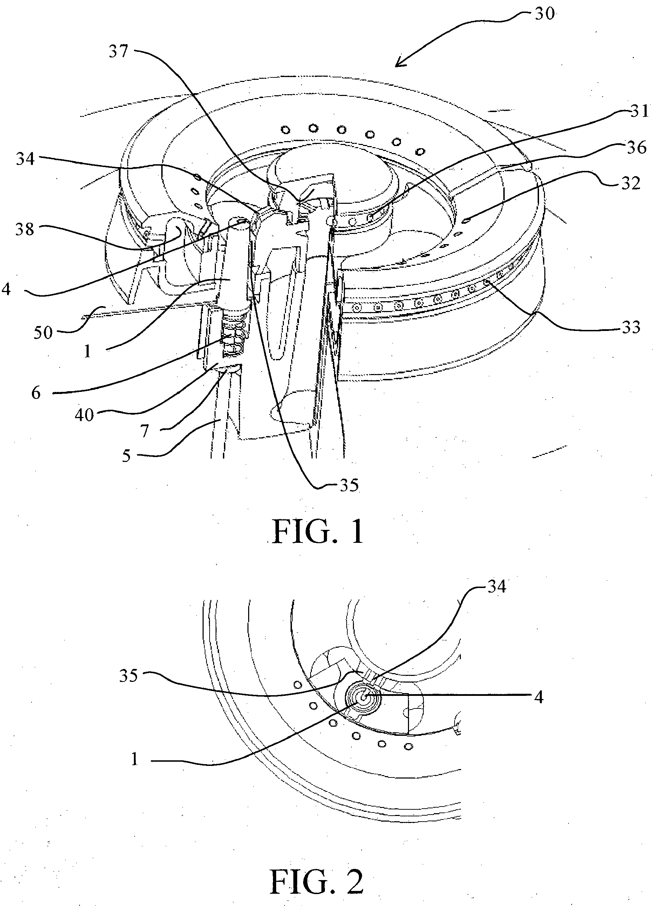

In FIG 1 bis 9 ist ein Gasherd der vorliegenden Erfindung veranschaulicht. Ausgehend vom Gegenstand der Erfindung werden hier nur die betreffenden Bereiche eines Brenners dargestellt. Ein erfindungsgemäßer Gasherd umfasst zumindest einen Brenner 30 als Wärmequelle beim Kochen. Unterhalb des Brenners befindet sich eine Brennerfassung 40. Am Brenner 30 sind eine Vielzahl von Zentralbrennstellen 31 zur Erzeugung einer Zentralflamme vorgesehen. Überdies ist der Brenner 30 mit mehreren Mittel- und Außenbrennstellen 32 und 33 zur Erzeugung einer Mittel- bzw. Außenflamme versehen. Wie in FIG 1 gezeigt ist, befindet sich zwischen Zentralbrennstellen 31 und Mittelbrennstellen 32 eine Zündnut 34, die außerhalb eines inneren Gasmischraums 37 angeordnet ist. Beim Betrieb, des erfindungsgemäßen Brenners 30 wird das Brenngas zunächst in den inneren Gasmischraum 37 eingeleitet und strömt dann aus den Zentralbrennstellen 31 und der Zündnut 34 heraus, wobei der Lichtbogen zur Zündung zuerst zwischen einem Vorsprung 35 und einer Elektrode entsteht. Somit erfolgt die Zündung zunächst an der Zündnut 34 und dann an den Zentralbrennstellen 31. Dabei sorgt die Zündnut 34 dafür, das aus dem inneren Gasmischraüm 37 austretende Gas so schnell wie möglich anzuzünden. Durch die Anordnung der Zündnut 34 im Vorsprung 35, der aus dem Außenumfang des zentralen Gasmischraums hervorragt, kann zudem gewährleistet werden, dass der Lichtbogen zur Zündung genau an der Stelle der Zündnut 34 erzeugt wird. Nachdem die Zentralflamme gezündet worden ist, wird das aus den Mittelbrennstellen 32 strömende Gas, das über einen äußeren Gasmischraum 38 zugeführt wird, schnell durch die sich nach außen hin ausbreitende Zentralflamme entzündet. Da zwischen Mittel- und Außenbrennstellen 32 und 33 eine Flammenausbreitungsnut 36 ausgebildet ist, finden die Erzeugung einer Mittelflamme und die Zündung des aus den Außenbrennstellen 33 strömenden Gases nahezu gleichzeitig statt. Bei einem erfindungsgemäßen Gasherd ist die Zündelektrode 1 zwischen den Zentralbrennstellen 31 und Mittelbrennstellen 32 angebracht. Die Zündelektrode 1 umfasst die eigentliche Elektrode 3 und einen diese von außen umschließenden Keramikmantel 2. An der Oberseite des Keramikmantels 2 weist diese eine Struktur 4 auf, mit der die Elektrode 3 ausschließlich eine Zündung in Richtung der Zentralbrennstellen 31 vollziehen kann. Hierbei sei darauf hingewiesen, dass vom Schutzumfang der vorliegenden Erfindung auch alle Varianten umfasst sind, die sich aufgrund der Lehre der Erfindung ohne erfinderische Tätigkeit ableiten lassen. So kann z.B. in Abhängigkeit von der Anordnung der Brennstellen des Brenners eines jeweiligen Gasherdes und ggf. vom Aufbau weiterer dem Brenner zugehöriger Bauteile die erfindungsgemäße Zündelektrode neben denjenigen Brennstellen des Brenners, welche als Erstes angezündet werden, angeordnet und eine entsprechende Änderung am Aufbau vorgenommen werden.

Wie aus FIG 1 bis 3 hervorgeht, wird der erfindungsgemäße Gasherd so ausgeführt, dass die Brennerfassung 40 zur Verbindung mit einer Zündelektrode dient. In der Brennerfassung 40 ist ferner ein Anschlagschlitz 41 ausgebildet, der einem Drehanschlag 22 entsprechend geformt ist und in dem der Drehanschlag 22 im Montagezustand liegt.

FIG 1 bis 8 zeigen eine erste Ausführungsform eines erfindungsgemäßen Gasherdes, bei der die genannte Struktur zur Begrenzung der Zündrichtung der Zündelektrode 1 eine an der Oberseite des Keramikmantels 2 sowohl nach oben als auch seitlich geöffnete Nut 4 ist. Die Elektrode 3 ist im Wesentlichen ┐-förmig ausgebildet und ihr kurzer Schenkel 31 befindet sich mit dessen nach außen weisendem Ende innerhalb der Nut 4. Hierbei sei ebenfalls darauf hingewiesen, dass vom Schutzumfang der vorliegenden Erfindung auch alle Varianten der Struktur zur Begrenzung der Zündrichtung umfasst sind, die sich aufgrund der Lehre der Erfindung ohne erfinderische Tätigkeit ableiten lassen. So kann die Zündelektrode 1 eine Struktur zur Begrenzung der Zündrichtung umfassen, welche sich beispielsweise an der Oberseite des Keramikmantels 2 oder an einer anderen geeigneten Stelle befindet und als Nut 4 ausgeführt sein kann, die aber nur seitlich am Keramikmantel 2 geöffnet ist.

In der ersten Ausführungsform eines erfindungsgemäßen Gasherdes nach FIG 5 bis 8 weist der kurze Schenkel 31 der Elektrode 3 eine Länge auf, die ungefähr der radialen Tiefe der Nut 4 entspricht.

In der ersten Ausführungsform eines erfindungsgemäßen Gasherdes nach FIG 5 bis 8 ist die Breite W der Nut 4 etwas größer als der Durchmesser der Elektrode 3.

In der ersten Ausführungsform eines erfindungsgemäßen Gasherdes nach FIG 5 bis 8 ist an der Unterseite des Keramikmantels 2 ein Positionierkragen 21 angeformt, der sich teilweise radial nach außen zu einem Drehanschlag 22 erstreckt.

In der ersten Ausführungsform eines erfindungsgemäßen Gasherdes nach FIG 1 bis 8 sind an der Brennerfassung 40 Rastausnehmungen 42 und 43 vorgesehen, wobei eine Druckfeder 6 zwischen Positionierkragen 21 und Rastausnehmungen 42 und 43 angebracht ist.

In der ersten Ausführungsform eines erfindungsgemäßen Gasherdes nach FIG 1 bis 8 ist am unteren Ende der Elektrode 3 ein elektrischer Leiter 5 angeschlossen, der durch eine Leiteröffnung unterhalb der Rastausnehmungen 42 und 43 bis unter die Brennerfassung 40 verläuft, wobei an einem sich direkt unterhalb der Brennerfassung 40 befindenden Abschnitt des Leiters 5 ein Federring 7 greift.

In FIG 9 ist eine weitere Ausführungsform der Zündelektrode eines erfindungsgemäßen Gasherdes bzw. eine optionale Abwandlung der Struktur zur Begrenzung der Zündrichtung der Zündelektrode dargestellt. Hierbei ragt die Elektrode 3 der Zündelektrode 1 teilweise aus der Oberseite des Keramikmantels 2 hervor und bildet somit einen Zündteil. Als Struktur zur Begrenzung der Zündrichtung dient hier eine Wand 23', die an der Oberseite des Keramikmantels 2 diesen Zündteil nur zum Teil umschließt.

In einer in FIG 1 bis 5 dargestellten ersten Ausführungsform einer Verbindungsstruktur der Zündelektrode eines erfindungsgemäßen Gasherdes ist die Deckplatte 50 an einer der Zündelektrode 1 zugeordneten Stelle mit einer Zündelektrodenöffnung 51 versehen. Die Deckplatte 50 ist mittels nicht dargestellter Verbindungselemente, wie beispielsweise Schrauben, an einer als Verbindungssockel dienenden Brennerfassung 40 angebracht. Die Brennerfassung 40 befindet sich unterhalb der Deckplatte 50 und ist durch einen Verbindungsarm 44 an einem unteren Gehäuseteil (nicht dargestellt) des Gasherdes befestigt. Als Verbindungsteil der Zündelektrode 1 dient der Positionierkragen 21. Zur Aufnahme der Zündelektrode 1 umfasst die Brennerfassung 40 zumindest die Rastausnehmungen 42 und 43. Die Druckfeder 6 ist zwischen der Unterseite des Positionierkragens 21 und der Rastausnehmung 43 angeordnet. Im Rahmen der konstruktiven Gestaltung der vorliegenden Erfindung erweist sich eine Ausbildung der Federvorrichtung als Druckfeder als leicht ausführbar. Von der Unterseite des Positionierkragens 21 des isolierenden Keramikmantels 2 aus erstreckt sich ein Verlängerungsabschnitt 24, der vom oberen Teil der Druckfeder 6 umgeben wird. Mit dem Verlängerungsabschnitt 24 kann in gewissem Maße vermieden werden, dass sich die Druckfeder 6 möglicherweise an ihrer Montageposition verschiebt. Um der Zündelektrode einen Verschiebungsspielraum zu ermöglichen, ist vorgesehen, dass die Länge C der Diagonale des Mittelquerschnitts des Positionierkragens 21 kleiner ist als der innere Umfang A der Rastausnehmung 42. Ferner ist die Abmessung D der Zündelektrodenöffnung 51 kleiner als der äußere Umfang- B des Positionierkragens 21. Dies ermöglicht, dass die Deckplatte 50 ohne eine zusätzliche Arretierung der Zündelektrode nach oben hin die Funktion eines Begrenzungselements hinsichtlich einer Bewegung der Zündelektrode 1 nach oben übernimmt. Der elektrische Leiter 5 der Zündelektrode erstreckt sich durch die Leiteröffnung unterhalb der Rastausnehmung 43 unter die Brennerfassung 40, wobei an einem sich-direkt unterhalb-der Brennerfassung 40 befindenden Abschnitt des Leiters 5 der Federring 7 greift. Dieser Federring 7 dient zur Vorpositionierung der Zündelektrode 1 bei der Montage, d.h. die Höhe der Zündelektrode 1 kann vor der Montage der Deckplatte 50 voreingestellt werden, indem die Reibungskraft zwischen Federring 7 und Leiter 5 der Zündelektrode festgelegt wird. Auf diese Weise lässt sich beim Einbau der Deckplatte 50 die Fluchtung von Zündelektrode 1 und Zündelektrodenöffnung 51 leichter realisieren. Dies gilt insbesondere für Gasherde mit zwei oder mehr Zündelektrodenöffnungen. In der ersten Ausführungsform des erfindungsgemäßen Gasherdes beträgt die Klemmkraft zwischen Federring 7 und Leiter 5 ungefähr 3N. Bei einer gleichmäßigen Auslegung des gesamten Zündelektrodensystems wird zwischen Federring 7 und Leiter 5 eine Reibungskraft von ungefähr 3N erzeugt, d.h. es entsteht keine relative Verschiebung zwischen Federring 7 und Leiter 6, wenn die Reibungskraft zwischen den beiden 3N, die größtmögliche Federkraft der Druckfeder 6, nicht übersteigt. Z.B. kann, wenn die Einbaulage der Zündelektrode 1 tiefer ist als deren voreingestellte Lage, durch einen zu großen Druck auf die Druckfeder 6 eine Federkraft von mehr als 3N erzeugt werden. Dies hat zur Folge, dass auf die Zündelektrode eine Kraft nach oben ausgeübt wird, so dass der Federring 7 nicht mehr stabil gegenüber dem Leiter 5 bleibt und sich nach unten verschiebt. Gleichzeitig dehnt sich die Druckfeder 6 aus und, wenn sich die Druckfeder 6 bis zu einer Länge entsprechend der voreingestellten Reibungskraft von 3N zwischen Leiter 5 und Federring 7 dehnt, erreicht die Zündelektrode 1 die vorbestimmte Gleichgewichtslage gegenüber der Brennerfassung 40, in welcher sich der Federring 7 nicht.mehr verschiebt. In der ersten Ausführungsform des erfindungsgemäßen Gasherdes besteht der Federring 7 aus Gummimaterial. Gummi als Werkstoff für Federelemente bietet Vorteile wie geeignete Eigenschaften, einfache Herstellbarkeit und niedrige Kosten. Alternativ kann der erfindungsgemäße Federring 7 aber auch aus anderen elastischen Werkstoffen, wie beispielsweise Silikagel oder flexiblen Kunststoffverbundwerkstoffen, hergestellt werden. Wie den FIG 3 und 4 zu entnehmen ist, schließen die Rastausnehmungen 42, 43 und die Leiteröffnung aneinander an und bilden somit ein durch die-Brennerfassung 40 hindurch verlaufendes Durchgangsloch, das über eine seitliche schmale Ausnehmung 41 mit der Außenseite der Brennerfassung 40 in Verbindung steht. Auf diese Weise kann eine bereits mit einer Druckfeder 6 bestückte Zündelektrode 1 mit ihrem Leiter 5 durch die schmale Ausnehmung 41 von der Seite her in ihre Einbauposition gebracht werden. Anschließend wird die Zündetektrode 1 nach unten in die voreingestellte Position gezogen und zur Vorfixierung vom Federring 7 hintergriffen. Für Zündelektroden mit längerem Leiter 5 erweist sich diese Ausgestaltung als besonders montagefreundlich.

Ergänzend ist anzumerken, dass die vorliegende Erfindung nicht nur auf die oben beschriebene(n) Ausführungsform(en) beschränkt ist, sondern alle möglichen Ausführungsformen einschließt, die den Patentansprüchen der vorliegenden Patentanmeldung zu entnehmen sind.

**Bezugszeichenliste**

| | | | |
|---|---|---|---|
| 1, 1' | Zündelektrode | 35 | Vorsprung |
| 2, 2' | Keramikmantel | 36 | Flammenausbreitungsnut |
| 3, 3' | Elektrode | 37 | Innerer Gasmischraum |
| 4 | Nut | 38 | Äußerer Gasmischraum |
| 5, 5' | Elektrischer Leiter | 40 | Brennerfassung |
| 6' | Druckfeder | 41 | Seitliche schmale Ausnehmung |
| 7 | Federring | 42, 43 | Rastausnehmung |
| 21, 21' | Positionierkragen | 44 | Verbindungsarm |
| 22, 22' | Drehanschlag | 50 | Deckplatte |
| 23' | Wand | 51 | Zündelektrodenöffnung |
| 24, 24' | Verlängerungsabschnitt | | |
| 31 | Kurzer Schenkel | | |
| 30 | Brenner | | |
| 31 | Zentralbrennstelle | | |
| 32 | Mittelbrennstelle | | |
| 33 | Außenbrennstelle | | |
| 34 | Zündnut | | |

## Patentansprüche

1. Gasherd mit einem mit Zentralbrennstellen (31) ausgestatteten Brenner (30), welcher mit einem inneren Gasmischraum (37) zum Versorgen der Zentralbrennstellen (31) mit Brenngas versehen ist, einem unterhalb des Brenners (30) angebrachten Verbindungssockel (40) und einer an den Verbindungssockel (40) angeschlossenen Zündelektrode (1, 1'), welche eine Elektrode (3, 3') und einen diese umschließenden Keramikmantel (2, 2') aufweist, an dessen Oberseite eine Struktur (4, 23') zur Begrenzung der Zündrichtung der Elektrode (3, 3') ausgebildet ist, die eine Zündung in Richtung der Zentralbrennstellen (31) vorgibt,
**dadurch gekennzeichnet,**
**dass** außerhalb des Gasmischraums (37) ein Vorsprung (35) angeformt ist, welcher aus dem Außenumfang des Gasmischraums (37) herausragt und in welchem sich eine Zündnut (34) befindet, aus der das Brenngas nach Einleiten desselben in den Gasmischraum (37) herausströmt, wobei die Struktur (34, 23') eine Zündung in Richtung der Zündnut (34) vorgibt und ein Lichtbogen zuerst zwischen der Elektrode (3, 3') und dem Vorsprung (35) entsteht.

2. Gasherd gemäß Anspruch 1, **dadurch gekennzeichnet, dass** die Struktur zur Begrenzung der Zündrichtung eine Nut (4) ist, die an der Oberseite des Keramikmantels (2) seitlich am Keramikmantel geöffnet ist, und dass die Elektrode (3) im Wesentlichen 1-förmig ausgebildet ist und entsprechend einen kurzen Schenkel (31) umfasst, der sich mit dessen nach außen weisendem Ende innerhalb der Nut (4) befindet.

3. Gasherd gemäß Anspruch 1, **dadurch gekennzeichnet, dass** die Struktur zur Begrenzung der Zündrichtung eine Nut (4) ist, die an der Oberseite des Keramikmantels (2) sowohl nach oben als auch seitlich geöffnet ist, und dass die Elektrode (3) im Wesentlichen 1-förmig ausgebildet ist und entsprechend einen kurzen Schenkel (31) umfasst, der sich mit dessen nach außen weisendem Ende innerhalb der Nut (4) befindet.

4. Gasherd gemäß Anspruch 2 oder 3, **dadurch gekennzeichnet, dass** der kurze Schenkel (31) der Elektrode (3) eine Länge aufweist, die ungefähr der radialen Tiefe der Nut (4) entspricht.

5. Gasherd gemäß Anspruch 4, **dadurch gekennzeichnet, dass** die Breite W der Nut (4) etwas größer ist als der Durchmesser der Elektrode (3).

6. Gasherd gemäß Anspruch 1, **dadurch gekennzeichnet, dass** die Elektrode (3') teilweise aus der Oberseite des Keramikmantels (2') hervorragt und somit einen Zündteil bildet, und dass als Struktur zur Begrenzung der Zündrichtung eine Wand (23') dient, die an der Oberseite des Keramikmantels (2') diesen Zündteil nur zum Teil umschließt.

7. Gasherd gemäß einem der Ansprüche 1 bis 6, **dadurch gekennzeichnet, dass** an der Unterseite des Keramikmantels (2) ein Positionierkragen (21, 21') angeformt ist, der sich teilweise radial nach außen zu einem Drehanschlag (22, 22') erstreckt.

8. Gasherd gemäß Anspruch 1, **dadurch gekennzeichnet, dass** es sich bei dem Verbindungssockel um eine Brennerfassung (40) handelt, in der ein Anschlagschlitz (41) ausgebildet ist, der dem Drehanschlag (22, 22') entsprechend geformt ist und in dem der Drehanschlag (22, 22') im Montagezustand liegt.

9. Gasherd gemäß Anspruch 8, **dadurch gekennzeichnet, dass** an der Brennerfassung Rastausnehmungen (42, 43) ausgebildet sind, zwischen denen und dem Positionierkragen (21) eine Druckfeder (6) angebracht ist.

10. Gasherd gemäß Anspruch 9, **dadurch gekennzeichnet, dass** am unteren Ende der Elektrode (3) ein elektrischer Leiter (5) angeschlossen ist, der sich durch eine Leiteröffnung unterhalb der Rastausnehmungen (42, 43) unter die Brennerfassung erstreckt, wobei an einem sich direkt unterhalb der Brennerfassung befindenden Abschnitt des Leiters ein Federring (7) greift

## Claims

1. Gas range with a burner (30) fitted with central flame points (31), which is provided with an inner gas mixing chamber (37) for supplying the central flame points (31) with combustion gas, a connection base (40) attached underneath the burner (30) and an ignition electrode (1, 1') connected to the connection base (40), which has an electrode (3, 3') and a ceramic casing (2, 2') surrounding this, on the surface of which a structure (4, 23') for limiting the ignition direction of the electrode (3, 3') is formed, which forces an ignition in the direction of the central flame points (31), **characterised in that**
outside the gas mixing chamber (37) a projection (35) is integrally moulded which projects out of the outer circumference of the gas mixing chamber (37) and in which an ignition groove (34) is located, out of which the combustion gas flows after having been introduced into the gas mixing chamber (37), wherein the structure (34, 23') forces an ignition in the direction of the ignition groove (34) and an arc is first created between the electrode (3, 3') and the projection (35).

2. Gas range according to claim 1, **characterised in that** the structure for limiting the ignition direction is a groove (4) which on the upper side of the ceramic casing (2) is open laterally on the ceramic casing, and that the electrode (3) is designed to be essentially 1-shaped and accordingly comprises a short limb (31), which with its end pointing outwards is located within the groove (4).

3. Gas range according to claim 1, **characterised in that** the structure for limiting the ignition direction is a groove (4), which on the upper side of the ceramic casing (2) is open both upwards and laterally, and that the electrode (3) is designed to be essentially 1-shaped and accordingly comprises a short limb (31), which with its end pointing outwards is located within the groove (4).

4. Gas range according to claim 2 or 3, **characterised in that** the short limb (31) of the electrode (3) has a length which corresponds approximately to the radial depth of the groove (4).

5. Gas range according to claim 4, **characterised in that** the width W of the groove (4) is somewhat larger than the diameter of the electrode (3).

6. Gas range according to claim 1, **characterised in that** the electrode (3') partially projects out of the upper side of the ceramic casing (2') and thus forms an ignition unit, and that a wall (23') serves as a structure for limiting the ignition direction and on the upper side of the ceramic casing (2') surrounds said ignition unit only partially.

7. Gas range according to one of claims 1 to 6, **characterised in that** a positioning collar (21, 21') is integrally moulded on the underside of the ceramic casing (2) and extends partially radially outwards to form a rotating stop (22, 22').

8. Gas range according to claim 1, **characterised in that** the connection base is a burner frame (40) in which a stop slot (41) is formed which is shaped to correspond to the rotating stop (22, 22') and in which the rotating stop (22, 22') lies in the assembled state.

9. Gas range according to claim 8, **characterised in that** latching recesses (42, 43) are formed on the burner frame, between which and the positioning collar (21) a compression spring (6) is attached.

10. Gas range according to claim 9, **characterised in that** an electric conductor (5) is connected to the lower end of the electrode (3), and extends through a conductor aperture underneath the latching recesses (42, 43) to under the burner frame, wherein a spring washer (7) engages at a section of the conductor located immediately underneath the burner frame.

## Revendications

1. Cuisinière à gaz comprenant un brûleur (30) équipé de foyers centraux (31), lequel brûleur est muni d'une chambre de mélange de gaz intérieure (37) destinée à alimenter les foyers centraux (31) en gaz combustible, comprenant un socle de liaison (40) placé en dessous du brûleur (30) et une électrode d'allumage (1, 1') reliée au socle de liaison (40), laquelle présente une électrode (3, 3') et une enveloppe céramique (2, 2') entourant celle-ci, sur le côté supérieur de laquelle enveloppe céramique est réalisée une structure (4, 23') destinée à délimiter la direction d'allumage de l'électrode (3, 3') qui définit un allumage en direction des foyers centraux (31),
**caractérisée en ce**
**qu'**à l'extérieur de la chambre de mélange de gaz (37) est formée une saillie (35) qui dépasse hors de la circonférence extérieure de la chambre de mélange de gaz (37) et dans laquelle se trouve une rainure d'allumage (34) hors de laquelle afflue le gaz combustible après son introduction dans la chambre de mélange de gaz (37), la structure (34, 23') définissant un allumage en direction de la rainure d'allumage (34) et un arc se produisant d'abord entre l'électrode (3, 3') et la saillie (35).

2. Cuisinière à gaz selon la revendication 1, **caractérisée en ce que** la structure destinée à délimiter la direction d'allumage est une rainure (4) qui, sur le côté supérieur de l'enveloppe céramique (2), est ouverte latéralement sur l'enveloppe céramique, et **en ce que** l'électrode (3) est essentiellement réalisée en forme de 1 et comprend de manière correspondante un côté court (31) qui, avec son extrémité orientée vers l'extérieur, se trouve à l'intérieur de la rainure (4).

3. Cuisinière à gaz selon la revendication 1, **caractérisée en ce que** la structure destinée à délimiter la direction d'allumage est une rainure (4) qui, sur le côté supérieur de l'enveloppe céramique (2), est ouverte aussi bien vers le haut que latéralement, et **en ce que** l'électrode (3) est essentiellement réalisée en forme de 1 et comprend de manière correspondante un côté court (31) qui, avec son extrémité orientée vers l'extérieur, se trouve à l'intérieur de la rainure (4).

4. Cuisinière à gaz selon la revendication 2 ou 3, **caractérisée en ce que** le côté court (31) de l'électrode (3) présente une longueur qui correspond approximativement à la profondeur radiale de la rainure (4).

5. Cuisinière à gaz selon la revendication 4, **caractérisée en ce que** la largeur W de la rainure (4) est un peu plus grande que le diamètre de l'électrode (3).

6. Cuisinière à gaz selon la revendication 1, **caractérisée en ce que** l'électrode (3') dépasse en partie hors du côté supérieur de l'enveloppe céramique (2') et forme ainsi une partie d'allumage, et **en ce qu'**une paroi (23') sert de structure destinée à délimiter la direction d'allumage, laquelle paroi, sur le côté supérieur de l'enveloppe céramique (2'), entoure cette partie d'allumage seulement en partie.

7. Cuisinière à gaz selon l'une quelconque des revendications 1 à 6, **caractérisée en ce que** sur le côté inférieur de l'enveloppe céramique (2) est formé un col de positionnement (21, 21') qui s'étend en partie radialement vers l'extérieur vers une butée de rotation (22, 22').

8. Cuisinière à gaz selon la revendication 1, **caractérisée en ce que** le socle de liaison est un support de brûleur (40) dans lequel est réalisée une fente de butée (41) qui est formée de manière correspondant à la butée de rotation (22, 22') et dans laquelle se trouve la butée de rotation (22, 22') à l'état de montage.

9. Cuisinière à gaz selon la revendication 8, **caractérisée en ce que** des évidements d'enclenchement (42, 43) sont réalisés dans le support de brûleur, entre lesquels et le col de positionnement (21) est placé un ressort de compression (6).

10. Cuisinière à gaz selon la revendication 9, **caractérisée en ce que** sur l'extrémité inférieure de l'électrode (3) est raccordé un conducteur électrique (5) qui s'étend en dessous du support de brûleur, à travers une ouverture de conduite située en dessous des évidements d'enclenchement (42, 43), une rondelle élastique (7) ayant prise sur une section du conducteur, se trouvant directement en-dessous du support de brûleur.
